# EUROPEAN PATENT APPLICATION

(11) **EP 4 757 019 A1**
(43) Date of publication of application: **10.06.2026**
(21) Application number: 24929302.8
(22) Date of filing: 09.12.2024
(51) Int. Cl.: H01M 50/184, H01M 50/152

(54) **CAP STRUCTURE AND BATTERY**

(30) Priority: 15.03.2024 CN 202420515622 U
(71) Applicant: Eve Energy Co., Ltd., Huizhou, Guangdong 516006 (CN)
(72) Inventor: LIU, Ruili, Guangdong 516006 (CN); LI, Jidong, Guangdong 516006 (CN); SONG, Pengyuan, Guangdong 516006 (CN)
(74) Representative: Berggren Oy
(86) International application number: PCT/CN2024/137809
(87) International publication number: WO 2025/189858

(57) **Abstract**

A cap structure and a battery are provided. The cap structure includes a cap assembly and a sealing ring sleeved on the cap assembly. A first sealing portion of the sealing ring includes a first outer wall, a first inner wall, a second outer wall, and a second inner wall. A distance from the first outer wall to a central axis is greater than a distance from the second outer wall to the central axis. A ratio of a distance from the second outer wall to an extension line of the first outer wall to a distance from the second inner wall to an extension line of the first inner wall is 1 : (1-10). The cap assembly is disposed corresponding to the second inner wall.

## Description

This application claims the priority to Chinese Patent Application No. 202420515622.7, filed on March 15, 2024 with the China National Intellectual Property Administration, the contents of which is incorporated herein by reference in its entirety.

### TECHNICAL FIELD

The present application relates to the field of battery technologies, and in particular, to a cap structure and a battery.

### BACKGROUND

Among various components of a lithium-ion battery, a cap is one of the critical components, and the quality of its design directly affects the performance, liquid tightness, safety, service life, and manufacturing cost of the battery.

### SUMMARY

However, in the related technologies, a sealing ring of lithium-ion battery caps are typically made of non-metallic materials, such as plastics. When assembled with a steel shell of lithium-ion batteries, grooves are usually provided in a periphery of the sealing ring to prevent deformation of metal components, such as a top cover. Nevertheless, during the compression process, the metal parts are prone to damage the sealing ring due to the presence of the grooves, which results in an external short circuit of the battery, thereby compromising battery safety and reducing the manufacturing yield rate.

According to a first aspect, the present application provides a cap structure for a lithium-ion battery, including:
a cap assembly; and
a sealing ring sleeved on the cap assembly and having a central axis extending along a first direction; where the sealing ring includes a first sealing portion extending along the first direction, and at least part of the cap assembly is disposed within a cavity formed by the first sealing portion;
where the first sealing portion includes a first outer wall, a first inner wall disposed opposite to the first outer wall in a second direction, a second outer wall, and a second inner wall disposed opposite to the second outer wall in the second direction, and the second direction is perpendicular to the first direction; the first outer wall and the second outer wall are located on a same side of the first sealing portion, and the first inner wall and the second inner wall are located on a same side of the first sealing portion;
where a distance from the first outer wall to the central axis is greater than a distance from the second outer wall to the central axis; a vertical distance from the second outer wall to an extension line of the first outer wall is defined as a first distance, a vertical distance from the second inner wall to an extension line of the first inner wall is defined as a second distance, and a ratio of the first distance to the second distance is 1 : (1-10); where the cap assembly is at least partially disposed corresponding to the second inner wall along the second direction.

According to a second aspect, the present application provides a cap structure, including:
a cap assembly; and
a sealing ring sleeved on the cap assembly, where the sealing ring includes a first sealing portion, and at least part of the cap assembly is disposed within a cavity formed by the first sealing portion;
where a portion of the first sealing portion is configured to be bent along a second direction; the first sealing portion includes a first inner wall and a first outer wall; the first outer wall includes a portion extending along the second direction and another portion extending along the first direction; the first inner wall extends along the second direction; the portion of the first outer wall extending along the second direction is disposed opposite to the first inner wall; the first direction and the second direction are perpendicular to each other; the first sealing portion further includes a second outer wall and a second inner wall extending along the first direction; where the second outer wall and the another portion of the first outer wall extending along the first direction are located on a same side, and the second inner wall and the first inner wall are disposed perpendicular to each other;
a vertical distance from the second outer wall to an extension line of the another portion of the first outer wall along the second direction is defined as a first distance, a vertical distance from the second inner wall to an extension line of the first inner wall along the second direction is defined as a second distance, a ratio of the first distance to the second distance is 1 : (1-10), where the cap assembly is at least partially disposed corresponding to the second inner wall along the second direction.

According to a third aspect, the present application provides a battery, including:
a housing; and
a cap structure disposed in the housing, where a limiting portion is connected to the cap assembly along the first direction, and the second inner wall is connected to the cap assembly along the second direction.

According to a fourth aspect, the present application provides a cap structure, including:
a cap assembly; and
a sealing ring including a first sub-portion and a second sub-portion, where the first sub-portion includes a first outer wall disposed along a second direction and a first inner wall disposed opposite to the first outer wall, the second sub-portion includes a second outer wall disposed along the first direction and a second inner wall disposed opposite to the second outer wall; the first sub-portion extends along the second direction and is configured to be bent relative to the second sub-portion; the first sub-portion is connected to the cap assembly along the second direction, and a portion of the second sub-portion extends along the first direction and is connected to the cap assembly along the second direction; where a vertical distance between the first inner wall and the first outer wall along the first direction is smaller than a vertical distance between the second inner wall and the second outer wall along the second direction.

According to a fifth aspect, the present application provides a battery, including:
a housing; and
a cap structure disposed in the housing, where the housing includes a first housing portion, a second housing portion, a third housing portion, a fourth housing portion, and a fifth housing portion that are integrally formed, the first housing portion is connected to the first outer wall along the second direction, and the first inner wall is connected to the cap assembly along the second direction; the second housing portion extends along the first direction and is connected to a portion of the second outer wall along the second direction, and the second inner wall is connected to the cap assembly along the second direction; the third housing portion is protruded along the second direction toward a side closer to the cap assembly and is connected to another portion of the second outer wall; the second housing portion is connected to the first housing portion and the third housing portion respectively; the fourth housing portion is connected to the third housing portion along the first direction; and the fifth housing portion is connected to the fourth housing portion along the second direction.

### BENEFICIAL EFFECTS

The cap structure according to the present application includes at least the following beneficial effects: a cap structure includes: a cap assembly; and a sealing ring sleeved on the cap assembly and having a central axis extending along a first direction; where the sealing ring includes a first sealing portion extending along the first direction, at least a portion of the cap assembly is disposed in a cavity formed by the first sealing portion; the first sealing portion includes a first outer wall, a first inner wall disposed opposite to the first outer wall in a second direction, a second outer wall, and a second inner wall disposed opposite to the second outer wall in the second direction, the second direction is perpendicular to the first direction; the first outer wall and the second outer wall are located on a same side of the first sealing portion, and the first inner wall and the second inner wall are located on a same side of the first sealing portion; a distance from the first outer wall to the central axis is greater than a distance from the second outer wall to the central axis; a vertical distance from the second outer wall to an extension line of the first outer wall is defined as a first distance; a vertical distance from the second inner wall to an extension line of the first inner wall is defined as a second distance, and a ratio of the first distance to the second distance is 1 : (1-10); where the cap assembly is at least partially disposed corresponding to the second inner wall along the second direction. This solution addresses the problem in which the sealing ring is easily punctured by the cap assembly, leading to an external short circuit of the battery.

### BRIEF DESCRIPTION OF THE DRAWINGS

FIG. 1 is a schematic structural diagram of a cap structure according to an embodiment of the present application;
FIG. 2 is a partial view of FIG. 1 at A;
FIG. 3 is a partial view of FIG. 1 at B;
FIG. 4 is a schematic structural diagram of a sealing ring according to an embodiment of the present application;
FIG. 5A and FIG. 5B are schematic structural diagrams of a cap structure according to another embodiment of the present application;
FIG. 6 is a schematic structural diagram of a battery according to any embodiment of the present application;
FIG. 7 is a schematic structural diagram of a partial view of FIG. 6 at C according to the present application;
FIG. 8 is a schematic structural diagram of the sealing ring shown in FIG. 6 and FIG. 7 of the present application.

Reference numerals: 100, 200: cap structure; 10: cap assembly; 101: top cover; 1011: vent hole; 1012: reinforcing rib; 102: explosion-proof sheet; 103: perforated plate; 20: sealing ring; 201: first sealing portion; 2011: first outer wall; 2012: first inner wall; 2013: second outer wall; 2014: second inner wall; 2015: connecting wall; 202: limiting portion; 203: second sealing portion; 2031: first sealing sub-portion; 2032: second sealing sub-portion; 204: avoidance groove; 205: first sub-portion; 206: second sub-portion; 30: isolation ring; 40: housing; 401: first housing portion; 402: second housing portion; 403: third housing portion; 404: fourth housing portion; 405: fifth housing portion.

### DETAILED DESCRIPTION

The cap structure according to the present application will be described in detail below with reference to specific embodiments and the accompanying drawings.

### Embodiment 1

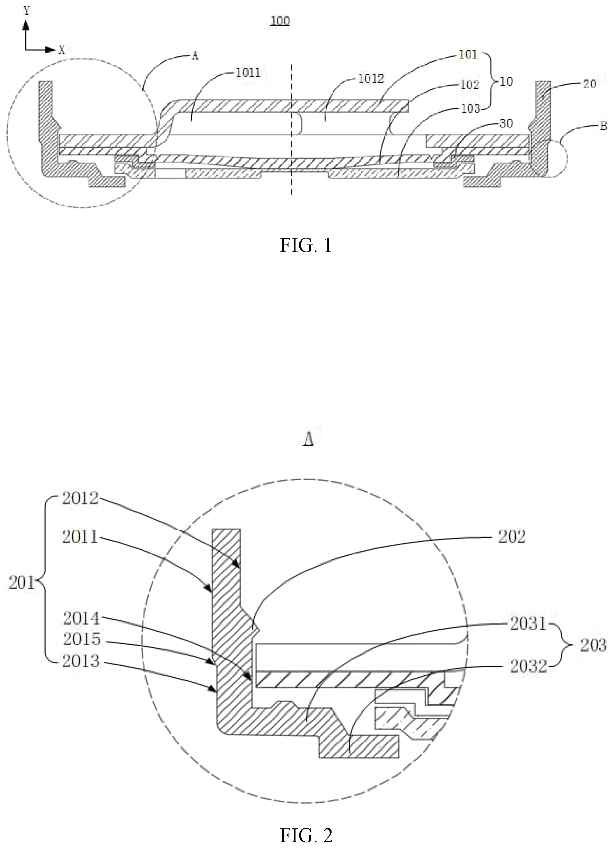

Referring to FIG. 1, FIG. 2, and FIG. 4, the present application provides a cap structure 100, including:
a cap assembly 10; and
a sealing ring 20 sleeved on the cap assembly 10 and having a central axis extending along a first direction Y, where the sealing ring 20 includes a first sealing portion 201 extending along the first direction Y, and at least part of the cap assembly 10 is disposed within a cavity formed by the first sealing portion 201;
where the first sealing portion 201 includes a first outer wall 2011, a first inner wall 2012 disposed opposite to the first outer wall 2011 in a second direction X, a second outer wall 2013, and a second inner wall 2014 disposed opposite to the second outer wall 2013 in the second direction X, and the second direction X is perpendicular to the first direction Y; the first outer wall 2011 and the second outer wall 2013 are located on a same side of the first sealing portion 201, and the first inner wall 2012 and the second inner wall 2014 are located on a same side of the first sealing portion 201.

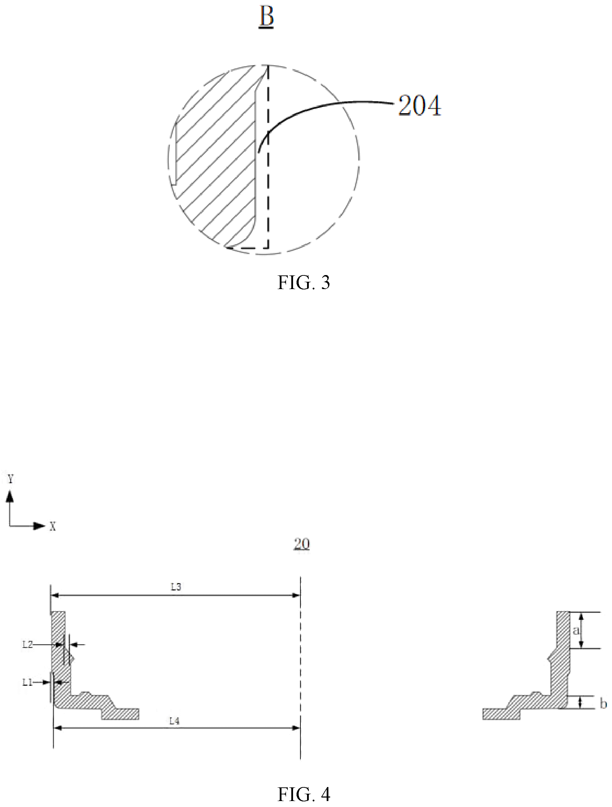

Referring to FIG. 4, a distance from the first outer wall 2011 to the central axis is greater than a distance from the second outer wall 2013 to the central axis. A vertical distance from the second outer wall 2013 to an extension line of the first outer wall 2011 is defined as a first distance L1, and a vertical distance from the second inner wall 2014 to an extension line of the first inner wall 2012 is defined as a second distance L2. A ratio of the first distance L1 to the second distance L2 is 1 : (1-10). The cap assembly 10 is disposed at least partially corresponding to the second inner wall 2014 along the second direction X.

Specifically, the distance from the first outer wall 2011 to the central axis is greater than the distance from the second outer wall 2013 to the central axis, indicating that there is a distance difference between the first outer wall 2011 and the second outer wall 2013. This distance difference provides space for the formation of an avoidance groove 204 (described in detail below). The avoidance groove 204 is recessed along the second direction X toward a side closer to the cap assembly 10. The avoidance groove 204 has a recess depth along the second direction X. The recess depth corresponds to the distance difference, namely the first distance L1. The second outer wall 2013 functions as an inner wall of the avoidance groove 204. The avoidance groove 204 is configured to provide an avoidance function, preventing deformation of the cap assembly 10 due to compression of the sealing ring 20 by a housing 40 when the cap structure 100 is assembled with the housing 40 of the battery.

The provision of the avoidance groove 204 causes the sealing ring 20 to become thinner at a portion along the second direction X, and the thinned portion of the sealing ring 20 is prone to be compressed and then the sealing ring 20 is damaged, which compromises the battery safety. To avoid the problem of compression and damage, the portion susceptible to be damaged needs to be thickened. A vertical distance from the second inner wall 2014 to an extension line of the first inner wall 2012 defines the thickened distance, namely the second distance L2. It can be understood that a difference between the vertical distance from the second outer wall 2013 to the extension line of the first inner wall 2012 and the vertical distance from the second outer wall 2013 to the second inner wall 2014 represents the thickened thickness of the sealing ring 20. The second distance L2 ≥ the first distance L1, indicating that the thickened thickness is greater than or equal to the recess depth of the avoidance groove 204 along the second direction X. During the compression process, the cap assembly 10 is disposed corresponding to the second inner wall 2014, indicating that the cap assembly 10 is disposed corresponding to the thickened portion. Accordingly, the portion corresponding to the avoidance groove 204 is not easily punctured by a top cover 101 and an explosion-proof sheet 102, thereby preventing damage to the sealing ring 20 caused by compression.

A distance from the first outer wall 2011 to the central axis is defined as L3, and a distance from the second outer wall 2013 to the central axis is defined as L4, i.e., L3 > L4. The ratio of the first distance L1 to the second distance L2 can be 1 : 1, indicating that the thickened thickness is equal to the recess depth of the avoidance groove 204 along the second direction X. Alternatively, the ratio of the first distance L1 to the second distance L2 can be 1 : 2, 1 : 3, 1 : 4, 1 : 5, 1 : 6, 1 : 7, 1 : 8, 1 : 9, or 1 : 10, but is not limited thereto. As long as the sealing ring 20 is not easily punctured and the assembly of other components as well as the sealing performance of the sealing ring 20 are not affected, the specific ratio of the first distance L1 to the second distance L2 is not limited, and can be determined according to practical applications.

Specifically, the sealing ring 20 can be circular, square, or have other geometric shapes. The sealing ring 20 is applicable to lithium-ion prismatic batteries, lithium-ion cylindrical batteries, or other types of lithium-ion batteries of different shapes. The sealing ring 20 forms a cavity within which the cap assembly 10 is disposed, and the sealing ring 20 encloses the cap assembly 10.

Referring to FIG. 1 and FIG. 3, in an alternative embodiment of the present application, the first sealing portion 201 is provided with the avoidance groove 204, and the second outer wall 2013 functions as the inner wall of the avoidance groove 204. The avoidance groove 204 is at least partially disposed corresponding to the cap assembly 10 along the second direction X.

Specifically, the avoidance groove 204 is provided to prevent deformation of the cap assembly 10 caused by compression of the housing 40 during assembly with the housing 40 of the battery.

Based on the provision of the avoidance groove 204, the distance from the first outer wall 2011 to the central axis is greater than the distance from the second outer wall 2013 to the central axis. In an embodiment of the present application, on the basis that the distance from the first outer wall 2011 to the central axis is greater than the distance from the second outer wall 2013 to the central axis, a distance from the first inner wall 2012 to the central axis is also greater than a distance from the second inner wall 2014 to the central axis, indicating that a thickness of a portion of the avoidance groove 204 that corresponds to an inner wall of the sealing ring 20 is increased, thereby preventing the sealing ring 20 from being punctured by the cap assembly 10 due to the presence of the avoidance groove 204.

In an alternative embodiment of the present application, the sealing ring 20 further includes a connecting wall 2015. The connecting wall 2015 is configured to connect the first outer wall 2011 and the second outer wall 2013. The connecting wall 2015 is inclined relative to both the first outer wall 2011 and the second outer wall 2013.

Illustratively, the connecting wall 2015 can also be perpendicular relative to the first outer wall 2011 and the second outer wall 2013, depending on practical applications. It can be understood that there is a distance difference between the first outer wall 2011 and the second outer wall 2013, and the connecting wall 2015 is configured to accommodate the height difference therebetween and to connect the first outer wall 2011 and the second outer wall 2013, respectively.

In an alternative embodiment of the present application, the sealing ring 20 further includes a limiting portion 202. The limiting portion 202 is protruded from the first sealing portion 201 and connects the first inner wall 2012 and the second inner wall 2014. An orthographic projection of the limiting portion 202 along the second direction X partially falls on the cap assembly 10. The limiting portion 202 is configured to constrain the position of the cap assembly 10.

Specifically, a cross-sectional shape of the limiting portion 202 can be triangular, trapezoidal, or any other suitable geometric shapes, depending on practical applications. Since the distance from the first inner wall 2012 to the central axis is greater than the distance from the second inner wall 2014 to the central axis, it can be understood that there is a height difference therebetween. The limiting portion 202 accommodates the height difference therebetween and connects the first inner wall 2012 and the second inner wall 2014, respectively. The limiting portion 202 functions to constrain the position of the cap assembly 10 and prevent the cap assembly 10 from moving along the first direction Y.

Specifically, the first sealing portion 201 is required to meet sealing requirements. Illustratively, taking the limiting portion 202 as a reference, an upper compression ratio a of the sealing ring 20 above the limiting portion 202 is required to be 5% to 60%. The second sealing portion 203 is also required to meet sealing requirements, namely, a lower compression ratio b of the second sealing portion 203 is required to be 10% to 80%. However, this is not limited thereto, and can be determined according to practical applications.

In an alternative embodiment of the present application, the sealing ring 20 further includes a second sealing portion 203. The second sealing portion 203 is vertically connected to one end of the first sealing portion 201, and a portion of the cap assembly 10 is supported on the second sealing portion 203.

Specifically, for example, the first sealing portion 201 and the second sealing portion 203 can be integrally formed via injection molding, which is not limited thereto. The second sealing portion 203 is configured to support a portion of the cap assembly 10. The sealing ring 20 is cooperated with the housing 40 of the battery, tightly fitting the sealing ring 20 onto the cap assembly 10 to achieve the sealing function of the battery. Referring to FIG. 2, in a state where the housing 40 does not apply a pressing force, the second sealing portion 203 has a stepped structure. Illustratively, the second sealing portion 203 can include a first sealing sub-portion 2031 and a second sealing sub-portion 2032. One end of the first sealing sub-portion 2031 is connected to the first sealing portion 201, and the other end is connected to the second sealing sub-portion 2032. There is a height between the first sealing sub-portion 2031 and the second sealing sub-portion 2032, which accommodates a height of a perforated plate 103 and/or an isolation ring 30.

A side of an explosion-proof sheet 102 away from the top cover 101 abuts against the first sealing sub-portion 2031. A buffer portion may be provided on a side of the first sealing sub-portion 2031 facing the explosion-proof sheet 102. The buffer portion is protruded toward the explosion-proof sheet 102. The buffer portion abuts against the explosion-proof sheet 102. The buffer portion is configured to support the explosion-proof sheet 102 and the top cover 101, providing support and cushioning. In addition, the buffer portion enables the sealing ring 20 to fit more tightly against the cap assembly 10 and an inner wall of the steel housing, thereby improving sealing performance. In an embodiment, an area of a perforated plate 103 is smaller than the areas of the top cover 101 and the explosion-proof sheet 102. The perforated plate 103 is welded to the explosion-proof sheet 102.

In an alternative embodiment of the present application, one end of the second inner wall 2014 and one end of the second outer wall 2013 are vertically connected to the second sealing portion 203.

A vertical distance from one end of the second inner wall 2014 away from the second sealing portion 203 to the second sealing portion 203 is greater than a vertical distance from one end of the second outer wall 2013 away from the second sealing portion 203 to the second sealing portion 203.

Specifically, an orthographic projection of the first outer wall 2011 along the second direction X is partially overlapped with an orthographic projection of the second inner wall 2014 along the second direction X. The sealing ring 20 has an increased thickness in the area where the orthographic projections overlap. An outer edge portion of the cap assembly 10 (for example, the top cover 101 and the explosion-proof sheet 102) is positioned at the overlapped portion of the orthographic projections of the two, such that the sealing ring 20 is not easily punctured by the cap assembly.

In an alternative embodiment of the present application, a vertical distance between the first outer wall 2011 and the first inner wall 2012 along the second direction X is less than or equal to a vertical distance between the second outer wall 2013 and the second inner wall 2014 along the second direction X.

It can be understood that an outer edge of the cap assembly 10 is arranged to face the second inner wall 2014, and the thicknesses of the second outer wall 2013 and the second inner wall 2014 along the second direction X is greater than the thicknesses of the first outer wall 2011 and the first inner wall 2012 along the second direction X, thereby ensuring that a portion of the sealing ring 20 in contact with the cap assembly 10 is less prone to be punctured.

In an alternative embodiment of the present application, the cap assembly 10 includes:
a perforated plate 103;
an explosion-proof sheet 102 disposed on the perforated plate 103; and
a top cover 101 disposed on the explosion-proof sheet 102 and adjacent to the limiting portion 202;
where the perforated plate 103, the explosion-proof sheet 102, and the top cover 101 are stacked in the first direction Y, and the explosion-proof sheet 102 and the top cover 101 are disposed opposite to the second inner wall 2014 on a side away from the central axis.

Specifically, the top cover 101 includes multiple vent holes 1011. The multiple vent holes 1011 are circumferentially arranged in the top cover 101. When a large volume of gas is generated inside the battery due to a short circuit or other reasons, causing a sharp increase in internal pressure of the battery, the vent holes 1011 can release the pressure in time to prevent the battery from explosion.

Reinforcing ribs 1012 are provided on a side of the top cover 101 facing the explosion-proof sheet 102, which function as supporting and reinforcing the strength of the top cover 101, thereby preventing sealing and safety issues caused by deformation or even rupture of the top cover 101 under excessive internal gas pressure of the battery.

Specifically, the explosion-proof sheet 102 and the top cover 101 are combined in a non- flanged manner, which simplifies both the fabrication of the explosion-proof sheet 102 and its assembly with the top cover 101. It can be understood that an outer edge of the explosion-proof sheet 102 is flush with an outer edge of the top cover 101, and the explosion-proof sheet 102 is welded to the top cover 101. However, this is not limited thereto. The middle portion of the top cover 101 forms a cavity. More specifically, for example, the explosion-proof sheet 102 has a bowl-shaped structure with an upward opening. A portion of the explosion-proof sheet 102 not welded to the top cover 101 is recessed toward a side away from the top cover 101, a part of which is connected to the perforated plate 103.

In an alternative embodiment of the present application, a gap is formed between the second inner wall 2014 and the cap assembly 10 along the second direction X.

Specifically, before assembling the housing 40, the gap is configured to ensure assembly tolerance of the cap assembly 10. The outer edges of the top cover 101, the explosion-proof sheet 102, and the perforated plate 103 of the cap assembly 10 do not abut against the sealing ring 20, thereby facilitating the assembly of the top cover 101, the explosion-proof sheet 102, and the perforated plate 103 with the sealing ring 20 and preventing deformation of the top cover 101, the explosion-proof sheet 102, and the perforated plate 103. After the housing 40 is assembled, the gap is compressed by the housing 40, thereby achieving the sealing function.

In an alternative embodiment of the present application, a cap structure 100 further includes:
an isolation ring 30 disposed between the explosion-proof sheet 102 and the perforated plate 103;
where the isolation ring 30 is configured to support a part of the explosion-proof sheet 102.

Specifically, an outer edge of the isolation ring 30 is be flush with an outer edge of the perforated plate 103, and the isolation ring 30 supports a part of the explosion-proof sheet 102 to isolate the outer edges of the explosion-proof sheet 102 and the perforated plate 103. For example, a middle portion of the explosion-proof sheet 102 and a middle portion of the perforated plate 103 can be connected.

In an alternative embodiment of the present application, a thickness of the sealing ring 20 along the second direction X ranges from 0.3 mm to 1.0 mm. However, this is not limited thereto, and the specific thickness is determined according to the practical applications.

### Embodiment 2

The structure of the cap assembly 10 in Embodiment 2 is the same as that in Embodiment 1. The difference between Embodiment 1 and Embodiment 2 lies in the sealing ring 20. The sealing ring 20 includes a first sealing portion 201. A part of the first sealing portion 201 is bent along the second direction X. The limiting portion 202 is disposed on the first sealing portion 201, and an orthographic projection of the limiting portion 202 along the first direction Y falls on the cap assembly 10. The cap structure 200 according to Embodiment 2 of the present application will be described in detail below with reference to the drawings.

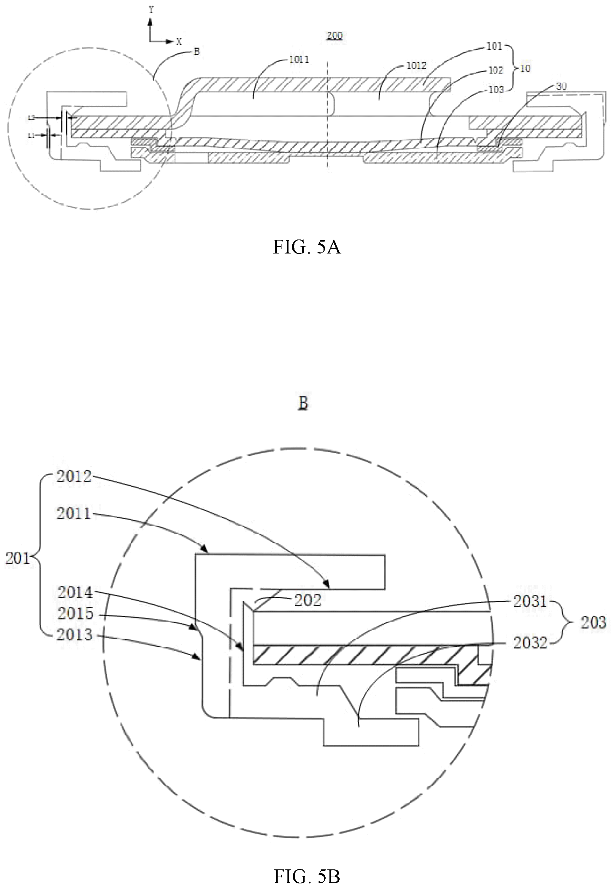

Referring to FIG. 5A and FIG. 5B, according to a second aspect, another embodiment of the present application provides a cap structure 200, including:
a cap assembly 10 of any embodiment; and
a sealing ring 20 sleeved on the cap assembly 10, where the sealing ring 20 includes a first sealing portion 201, and at least part of the cap assembly 10 is disposed within a cavity formed by the first sealing portion 201;
where a part of the first sealing portion 201 is bent along the second direction X. The first sealing portion 201 includes a first inner wall 2012 and a first outer wall 2011. The first outer wall 2011 includes a portion extending in the second direction X and another portion extending in the first direction Y. The portion extending in the second direction X can be, for example, perpendicularly connected to the another portion extending in the first direction Y. The first inner wall 2012 extends along the second direction X, and the portion of the first outer wall 2011 extending in the second direction X is disposed opposite to the first inner wall 2012. The first direction Y and the second direction X are perpendicular to each other. The first sealing portion 201 further includes a second outer wall 2013 and a second inner wall 2014 extending in the first direction Y. The second outer wall 2013 and the portion of the first outer wall 2011 extending in the first direction Y are located on a same side, and the second inner wall 2014 is perpendicularly connected to the first inner wall 2012.

A vertical distance from the second outer wall 2013 along the second direction X to an extension line of an another portion of the first outer wall 2011 is defined as the first distance L1. A vertical distance from the second inner wall 2014 along the second direction X to an extension line of the first inner wall 2012 is defined as the second distance L2. The ratio of the first distance L1 to the second distance L2 is 1 : (1-10). The cap assembly 10 is at least partially disposed corresponding to the second inner wall 2014 along the second direction X.

Specifically, a portion of the first sealing portion 201 is bent along the second direction X, so that a portion of the first outer wall 2011 also extends along the second direction X, another portion of the first outer wall 2011 extends along the first direction Y and is partially overlapped with an orthographic projection of the second inner wall 2014 in the second direction X, and the portions of the first inner wall 2012 and the first outer wall 2011 extending along the second direction X are relatively parallel and extend along the second direction X.

In Embodiment 2, the avoidance groove 204 is also provided. A depth, position, and function of the avoidance groove are the same as those in Embodiment 1. In order to avoid damage to the sealing ring 20 caused by compression, the portion prone to be damaged needs to be thickened. A vertical distance from the second inner wall 2014 to the extension line of the first inner wall 2012 along the second direction X is the thickened distance, i.e., the second distance L2. The second distance L2 is greater than or equal to the first distance L1, that is, the thickened thickness is greater than or equal to a recessed depth of the avoidance groove 204 along the second direction X. During the compression process, the cap assembly 10 is disposed corresponding to the second inner wall 2014, indicating that the cap assembly 10 is disposed corresponding to the thickened portion, so that the portion corresponding to the avoidance groove 204 is not easily ruptured, thereby solving the problem of damage to the sealing ring 20 caused by compression.

The sealing rings 20 of both Embodiment 1 and Embodiment 2 have elastic deformation. The elastic deformation of the sealing ring 20 in Embodiment 2 is smaller than the elastic deformation of the sealing ring 20 in Embodiment 1.

In an alternative embodiment of the present application, a cap structure 200 further includes:
a limiting portion 202 protruding from the first sealing portion 201 and connected to the cap assembly 10; an orthographic projection of the limiting portion 202 in the first direction Y falls on the cap assembly 10, and the limiting portion 202 is configured to limit the position of the cap assembly 10.

The sealing ring 20 of Embodiment 2 further includes a connecting wall 2015 and a second sealing portion 203, the structure, position, and function of which are the same as those of the connecting wall 2015 and the second sealing portion 203 in Embodiment 1, and will not be further described in this embodiment.

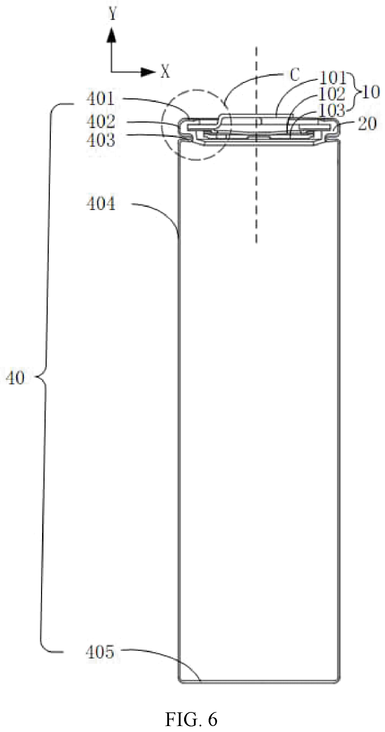

Referring to FIG. 6, according to a third aspect, the present application provides a battery, including:
a housing 40; and
any of the cap structures in the foregoing embodiments, where the cap structure is located in the housing 40, the limiting portion 202 is connected to the cap assembly 10 along the first direction Y, and the second inner wall 2014 is connected to the cap assembly 10 along the second direction X.

In an alternative embodiment of the present application, a side of the limiting portion 202 away from the first outer wall 2011 is flush with the first inner wall 2012 along the second direction X, and the first outer wall 2011 is flush with the second outer wall 2013 along the first direction Y.

Specifically, the housing 40 applies a pressing force to compress the sealing ring 20 toward the cap assembly 10. The first inner wall 2012 tightly fits against an upper surface of the top cover 101, and the second inner wall 2014 tightly fits against outer edges of the top cover 101 and the explosion-proof sheet 102, thereby ensuring sealing.

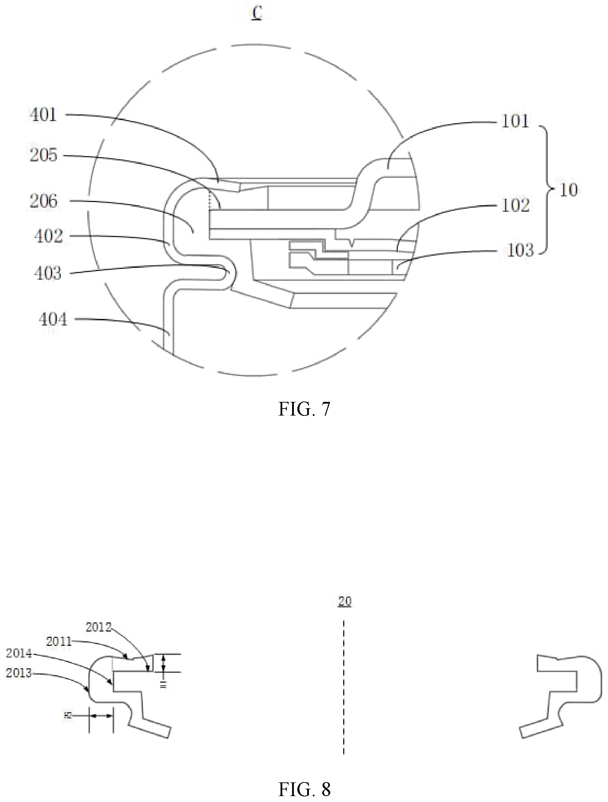

In Embodiments 1 and 2, the limiting portion 202 and the buffer portion located in the second sealing portion 203 can, for example, be flattened. That is, a side of the limiting portion 202 away from the first outer wall 2011 is flush with the first inner wall 2012 along the second direction X. Similarly, in Embodiments 1 and 2, the first distance L1 between the first outer wall 2011 and the second outer wall 2013 may, for example, be flattened so that the first outer wall 2011 is flush with the second outer wall 2013 along the first direction Y. In this manner, the sealing ring 20 assumes the shape illustrated in FIG. 6 to FIG. 8 when pressed by the housing 40.

Under the pressing force of the housing 40, in Embodiments 1 and 2, a portion of the second inner wall 2014 may, for example, fit against the outer edges of the top cover 101 and the explosion-proof sheet 102, while another portion of the second inner wall 2014 may fit against a side of the explosion-proof sheet 102 away from the top cover 101, thereby achieving sealing. The first sealing sub-portion 2031 partially fits against the side of the explosion-proof sheet 102 away from the top cover 101, and the second sealing sub-portion 2032 is disposed at an incline relative to the explosion-proof sheet 102. The inclined portion cannot contact the perforated plate 103, which does not affect the sealing performance of the sealing ring 20.

Moreover, due to the different elastic deformations of the sealing ring 20 in Embodiments 1 and 2, when the pressing force provided by the housing 40 is released, the sealing ring 20 in Embodiment 1 may, for example, fully rebound to the shape shown in FIG. 1, while the sealing ring 20 in Embodiment 2 may, for example, partially rebound to the shape shown in FIG. 5A.

### Embodiment 3

Referring to FIG. 6 to FIG. 8, according to a fourth aspect, the present application provides a cap structure 200, including:
any of the cap assemblies 10 in the foregoing embodiments; and
a sealing ring 20, including a first sub-portion 205 and a second sub-portion 206; where the first sub-portion 205 includes a first outer wall 2011 extending along the second direction X and a first inner wall 2012 disposed opposite to the first outer wall 2011; the second sub-portion 206 includes a second outer wall 2013 extending along the first direction Y and a second inner wall 2014 disposed opposite to the second outer wall 2013; the first sub-portion 205 extends along the second direction X and is bent relative to the second sub-portion 206; the first sub-portion 205 is connected to the cap assembly 10 along the second direction X, and a portion of the second sub-portion 206 extends along the first direction Y and is connected to the cap assembly 10 along the second direction X; a vertical distance H1 between the first inner wall 2012 and the first outer wall 2011 along the first direction Y is smaller than a vertical distance H1 between the second inner wall 2014 and the second outer wall 2013 along the second direction X, i.e., H1 < H2.

Specifically, in Embodiment 3, sides of the second outer wall 2013 and the second inner wall 2014 away from the first sub-portion 205 are curved to match edge shapes of the top cover 101 and the explosion-proof sheet 102. The second inner wall 2014 tightly fits against the outer edges of the top cover 101 and the explosion-proof sheet 102 along the second direction X, and the first inner wall 2012 fits against the upper surface of the top cover 101 along the first direction Y, being pressed together to ensure the sealing performance.

Specifically, the sealing ring 20, for example, undergoes plastic deformation and does not exhibit elasticity.

According to a fifth aspect, the present application provides a battery, including:
a housing 40; and
a cap structure 200, where the cap structure 200 is disposed in the housing 40; the housing 40 includes an first housing portion 401, a second housing portion 402, a third housing portion 403, a fourth housing portion 404, and a fifth housing portion 405 that are integrally formed; the first housing portion 401 is connected to the first outer wall 2011 along the second direction X, and the first inner wall 2012 is connected to the cap assembly 10 along the second direction X; the second housing portion 402 extends along the first direction Y and is connected to a portion of the second outer wall 2013 along the second direction X, and the second inner wall 2014 is connected to the cap assembly 10 along the second direction X; the third housing portion 403 is protruded along the second direction X toward a side closer to the cap assembly 10 and is connected to another portion of the second outer wall 2013; the second housing portion 402 is connected to the first housing portion 401 and the third housing portion 403, respectively; the fourth housing portion 404 is connected to the third housing portion 403 along the first direction Y, and the fifth housing portion 405 is connected to the fourth housing portion 404 along the second direction X.

Specifically, the first housing portion 401, the second housing portion 402, the third housing portion 403, the fourth housing portion 404, and the fifth housing portion 405 together enclose a cavity with one opening on a side. The cap structure 200 is positioned at the opening and is connected to the first housing portion 401, the second housing portion 402, and the third housing portion 403. The battery further includes a cell, which is located within a cavity formed by the fourth housing portion 404 and the fifth housing portion 405 and is connected to the cap structure 200.

The cap structure provided in the present application includes at least the following components and working principle: a cap assembly 10; and a sealing ring 20 sleeved on the cap assembly 10 and having a central axis extending along the first direction Y; where the sealing ring 20 includes a first sealing portion 201 extending along the first direction Y, at least a portion of the cap assembly 10 is disposed within the cavity formed by the first sealing portion 201; the first sealing portion 201 includes a first outer wall 2011, a first inner wall 2012 opposite to the first outer wall 2011 along the second direction X, a second outer wall 2013, and a second inner wall 2014 opposite to the second outer wall 2013 along the second direction X, the second direction X is perpendicular to the first direction Y; the first outer wall 2011 and the second outer wall 2013 are located on a same side of the first sealing portion 201, and the first inner wall 2012 and the second inner wall 2014 are located on a same side of the first sealing portion 201; a distance from the first outer wall 2011 to the central axis is greater than that from the second outer wall 2013 to the central axis; a vertical distance from the second outer wall 2013 to an extension line of the first outer wall 2011 is defined as a first distance L1, and a vertical distance from the second inner wall 2014 to the extension line of the first inner wall 2012 is defined as a second distance L2, a ratio of the first distance L1 to the second distance L2 may range from 1 : (1-10); and the cap assembly 10 is at least partially disposed corresponding to the second inner wall 2014 along the second direction X. This design increases a thickness of an inner wall of an avoidance groove 204 corresponding to the first sealing portion 201, thereby solving the problem of the sealing ring 20 being easily punctured by the cap assembly 10 due to the presence of the avoidance groove 204, which could otherwise lead to an external short circuit of the battery. At the same time, the explosion-proof sheet 102 and the top cover 101 adopt a non-flanged manner, which simplifies both the fabrication of the explosion-proof sheet 102 and its assembly with the top cover 101 and the perforated plate 103.

## Claims

1. A cap structure for a lithium-ion battery, comprising:
a cap assembly; and
a sealing ring sleeved on the cap assembly and having a central axis extending along a first direction; wherein the sealing ring comprises a first sealing portion extending along the first direction, and at least part of the cap assembly is disposed within a cavity formed by the first sealing portion;
wherein the first sealing portion comprises a first outer wall, a first inner wall disposed opposite to the first outer wall in a second direction, a second outer wall, and a second inner wall disposed opposite to the second outer wall in the second direction, and the second direction is perpendicular to the first direction; the first outer wall and the second outer wall are located on a same side of the first sealing portion, and the first inner wall and the second inner wall are located on a same side of the first sealing portion;
wherein a distance from the first outer wall to the central axis is greater than a distance from the second outer wall to the central axis; a vertical distance from the second outer wall to an extension line of the first outer wall is defined as a first distance, a vertical distance from the second inner wall to an extension line of the first inner wall is defined as a second distance, and a ratio of the first distance to the second distance is 1 : (1-10); wherein the cap assembly is at least partially disposed corresponding to the second inner wall along the second direction.

2. The cap structure according to claim 1, wherein the first sealing portion is provided with an avoidance groove, the second outer wall is defined as an inner wall of the avoidance groove, and the avoidance groove is at least partially disposed corresponding to the cap assembly along the second direction.

3. The cap structure according to claim 1, wherein the sealing ring further comprises a connecting wall connecting the first outer wall and the second outer wall, and the connecting wall is inclined relative to the first outer wall and the second outer wall.

4. The cap structure according to claim 2, wherein the sealing ring further comprises a limiting portion protruding from the first sealing portion and connecting the first inner wall and the second inner wall, an orthographic projection of the limiting portion along the first direction partially falls on the cap assembly, and the limiting portion is configured to limit a position of the cap assembly.

5. The cap structure according to claim 1, wherein the sealing ring further comprises a second sealing portion, the second sealing portion is perpendicularly connected to an end of the first sealing portion, and a portion of the cap assembly is supported on the second sealing portion.

6. The cap structure according to claim 4, wherein the cap assembly comprises:
a perforated plate;
an explosion-proof sheet disposed on the perforated plate; and
a top cover disposed on the explosion-proof sheet and located close to the limiting portion;
wherein the perforated plate, the explosion-proof sheet, and the top cover are stacked along the first direction, and a side of the explosion-proof sheet and/or the top cover away from the central axis is disposed opposite to the second inner wall.

7. The cap structure according to claim 1, wherein there is a gap between the second inner wall and the cap assembly along the second direction.

8. The cap structure according to claim 6, further comprising:
an isolation ring located between the explosion-proof sheet and the perforated plate;
wherein the isolation ring is configured to support a portion of the explosion-proof sheet.

9. The cap structure according to any one of claims 1 to 8, wherein a thickness of the sealing ring in the second direction ranges from 0.3 mm to 1.0 mm.

10. A cap structure, comprising:
the cap assembly according to any one of claims 1 to 9; and
a sealing ring sleeved on the cap assembly, wherein the sealing ring comprises a first sealing portion, and at least part of the cap assembly is disposed within a cavity formed by the first sealing portion;
wherein a portion of the first sealing portion is configured to be bent along a second direction; the first sealing portion comprises a first inner wall and a first outer wall; the first outer wall comprises a portion extending along the second direction and another portion extending along a first direction; the first inner wall extends along the second direction; the portion of the first outer wall extending along the second direction is disposed opposite to the first inner wall; the first direction and the second direction are perpendicular to each other; the first sealing portion further comprises a second outer wall and a second inner wall extending along the first direction; wherein the second outer wall and the another portion of the first outer wall extending along the first direction are located on a same side, and the second inner wall and the first inner wall are disposed perpendicular to each other;
a vertical distance from the second outer wall to an extension line of the another portion of the first outer wall along the second direction is defined as a first distance, a vertical distance from the second inner wall to an extension line of the first inner wall along the second direction is defined as a second distance, a ratio of the first distance to the second distance is 1 : (1-10); wherein the cap assembly is at least partially disposed corresponding to the second inner wall along the second direction.

11. The cap structure according to claim 10, further comprising:
a limiting portion protruding from the first sealing portion and connected to the cap assembly, wherein an orthographic projection of the limiting portion along the first direction falls on the cap assembly, and the limiting portion is configured to limit a position of the cap assembly.

12. A battery, comprising:
a housing; and
the cap structure according to any one of claims 1 to 11, wherein the cap structure is disposed in the housing, the limiting portion is connected to the cap assembly along a first direction, and the second inner wall is connected to the cap assembly along a second direction.

13. The battery according to claim 12, wherein a side of the limiting portion away from the first outer wall is flush with the first inner wall along the second direction, and the first outer wall is flush with the second outer wall along the first direction.

14. A cap structure, comprising:
the cap assembly according to any one of claims 1 to 9; and
a sealing ring comprising a first sub-portion and a second sub-portion, wherein the first sub-portion comprises a first outer wall disposed along a second direction and a first inner wall disposed opposite to the first outer wall, the second sub-portion comprises a second outer wall disposed along the first direction and a second inner wall disposed opposite to the second outer wall; the first sub-portion extends along the second direction and is configured to be bent relative to the second sub-portion; the first sub-portion is connected to the cap assembly along the second direction, and a portion of the second sub-portion extends along the first direction and is connected to the cap assembly along the second direction; wherein a vertical distance between the first inner wall and the first outer wall along the first direction is smaller than a vertical distance between the second inner wall and the second outer wall along the second direction.

15. A battery, comprising:
a housing; and
the cap structure according to claim 14, wherein the cap structure is disposed in the housing, the housing includes a first housing portion, a second housing portion, a third housing portion, a fourth housing portion, and a fifth housing portion that are integrally formed; the first housing portion is connected to the first outer wall along the second direction, and the first inner wall is connected to the cap assembly along the second direction; the second housing portion extends along the first direction and is connected to a portion of the second outer wall along the second direction, and the second inner wall is connected to the cap assembly along the second direction; the third housing portion is protruded along the second direction toward a side closer to the cap assembly and is connected to another portion of the second outer wall; the second housing portion is connected to the first housing portion and the third housing portion respectively; the fourth housing portion is connected to the third housing portion along the first direction; and the fifth housing portion is connected to the fourth housing portion along the second direction.
